# EUROPÄISCHE PATENTSCHRIFT

(11) **EP 2 993 433 B1**
(45) Veröffentlichungstag und Bekanntmachung des Hinweises auf die Patenterteilung: **26.06.2019**
(21) Anmeldenummer: 15178561.5
(22) Anmeldetag: 28.07.2015
(51) Int. Cl.: F26B 3/06, F26B 21/02, F26B 21/08, F26B 23/00

(54) **VORTROCKNUNGSVORRICHTUNG FÜR EINE TROCKNUNGSANLAGE**
PREDRYING APPARATUS FOR A DRYING ASSEMBLY
DISPOSITIF DE PRE-SECHAGE ET INSTALLATION DE SECHAGE

(30) Priorität: 29.08.2014 AT 501362014
(43) Veröffentlichungstag der Anmeldung: 09.03.2016
(73) Patentinhaber: Heutrocknung SR GmbH, 5204 Straßwalchen (AT)
(72) Erfinder: Reindl, Josef, 5204 Straßwalchen (AT)
(74) Vertreter: KLIMENT & HENHAPEL

(56) Entgegenhaltungen:
- CH-A- 216 480
- FR-A1- 2 535 445
- US-A- 2 137 347
- US-A- 4 255 870
- US-A1- 2011 067 262

## Beschreibung

### GEBIET DER ERFINDUNG

Die vorliegende Erfindung bezieht sich auf eine Trocknungsanlage zur Trocknung von Trocknungsgut, vorzugsweise von Pflanzen, wobei die Trocknungsanlage eine Vortrocknungsvorrichtung umfasst, die Vortrocknungsvorrichtung umfassend eine Vortrocknungsbox, in welcher das Trocknungsgut anordenbar ist, einen Ventilator, durch den Luft aus einem Endbereich der Vortrocknungsbox ansaugbar und einem Luftentfeuchter zuführbar ist, um mittels des Luftentfeuchters die Luft zu entfeuchten und von einer Temperatur T₀ auf eine erste erhöhte Temperatur T' anzuwärmen, wobei mittels des Ventilators die Luft schließlich durch die Vortrocknungsbox von einem Anfangsbereich zum Endbereich blasbar ist, wobei das Trocknungsgut zwischen Anfangsbereich und Endbereich auf einer anströmbare Fläche anordenbar ist.

### STAND DER TECHNIK

Zur Trocknung einer großen Vielzahl an unterschiedlichsten Trocknungsgütern werden Konvektionstrockner eingesetzt, in welchen zum Trocknen des jeweiligen Trocknungsguts mittels eines Gasstroms Wärme in das Trocknungsgut eingetragen und die im Trocknungsgut enthaltene Feuchtigkeit abtransportiert wird. Typische Trocknungsgüter können insbesondere Pflanzen, wie z.B. Gräser, sein, die zu Pellets oder Ballen weiterverarbeitet werden sollen. Es kann sich beim Trocknungsgut aber auch z.B. um organischen Abfall handeln.

Als Konvektionstrockner kommen typischerweise Trommeltrockner zum Einsatz, deren Trocknungskapazität über einen weiten Bereich dimensioniert werden kann, beispielsweise von 500 bis 50000 Liter Wasserverdunstung pro Stunde. Übliche Gastemperaturen für Konvektionstrockner liegen zwischen 800°C und 1000°C. Zur Erhitzung des Gases kommen dabei in der Regel gasbefeuerte Öfen zum Einsatz.

Nachteilig an dieser Art des Trocknens ist der hohe Energieeinsatz, insbesondere wenn ein hoher Durchsatz gefordert ist.

Aus der US 2011/067262 A1 ist ein Trocknungssystem bekannt, mit welchem Trocknungsgut in einem Behälter getrocknet wird. Dabei wird Trocknungsluft von unten bzw. von einem Boden, auf dem das Trocknungsgut liegt, durch das Trocknungsgut geblasen. Die Trocknungsluft tritt oben aus dem Trocknungsgut aus und wird einem Heizer zugeführt, um weiter aufgeheizt zu werden und mehr Feuchtigkeit aufnehmen zu können. Erst wenn eine gewisse Temperatur und Luftfeuchtigkeit erreicht sind, wird eine Klappe geöffnet, um die Trocknungsluft ab- und einer Entfeuchtungseinrichtung zuzuführen.

### AUFGABE DER ERFINDUNG

Es ist daher Aufgabe der vorliegenden Erfindung, Mittel zur Verfügung zu stellen, die die Trocknung mit geringerem Energieeinsatz bzw. eine energieeffizientere Trocknung im Vergleich zur Trocknung mit bekannten Trocknungsanlagen erlauben.

### DARSTELLUNG DER ERFINDUNG

Die Erfindung ist eine Trocknungsanlage gemäß Anspruch 1.

Kern der Erfindung ist es, eine vor dem eigentlichen Trocknungsprozess im Konvektionstrockner eine Vortrocknung in einer vorgeschalteten Vortrocknungsvorrichtung vorzusehen, wobei einerseits ein Luftentfeuchter zum Einsatz kommt, der gleichzeitig zur Entfeuchtung und zum Anwärmen der im Vortrocknungsprozess verwendeten Luft dient, und andererseits die Abgase des Konvektionstrockners zum weiteren Anwärmen dieser Luft ausnutzt, womit eine maximale Energieeffizienz gegeben ist. Dabei erfolgt das weitere Anwärmen in einer Luftströmungsrichtung bzw. Zirkulationsrichtung der Luft nach dem Luftentfeuchter. D.h. die Vortrocknung erfolgt grundsätzlich in einem Umluftbetrieb.

Es zeigt sich, dass durch das Vortrocknen mit einer Vortrocknungsvorrichtung bereits 20% bis 30% des Wassergehalts aus dem Trocknungsgut entfernt werden können, bevor dieses in den Konvektionstrockner gelangt. Insgesamt ergibt sich dadurch eine entsprechend hohe, in diesem Prozentbereich gelegene Energieeinsparung im Vergleich zur Verwendung des Konvektionstrockners alleine.

Konkret ist es daher bei einer Trocknungsanlage zur Trocknung von Trocknungsgut, vorzugsweise von Pflanzen, wobei die Trocknungsanlage eine Vortrocknungsvorrichtung umfasst, die Vortrocknungsvorrichtung umfassend eine Vortrocknungsbox, in welcher das Trocknungsgut anordenbar ist, einen Ventilator, durch den Luft aus einem Endbereich der Vortrocknungsbox ansaugbar und einem Luftentfeuchter zuführbar ist, um mittels des Luftentfeuchters die Luft zu entfeuchten und von einer Temperatur T₀ auf eine erste erhöhte Temperatur T' anzuwärmen, wobei mittels des Ventilators die Luft schließlich durch die Vortrocknungsbox von einem Anfangsbereich zum Endbereich blasbar ist, wobei das Trocknungsgut zwischen Anfangsbereich und Endbereich auf einer anströmbare Fläche anordenbar ist, erfindungsgemäß vorgesehen, dass die Trocknungsanlage einen Konvektionstrockner umfasst, dem die Vortrocknungsvorrichtung vorgeschaltet ist, und dass in einer Luftströmungsrichtung gesehen nach dem Luftentfeuchter und vor der Vortrocknungsbox ein Wärmetauscher vorgesehen ist, um Luft durch Abgase des Konvektionstrockners auf eine zweite erhöhte Temperatur T" anzuwärmen, wobei T'' ≥ T' gilt.

Dabei genügen für die Vortrocknung wesentlich geringere Temperaturen als jene, die im Konvektionstrockner zum Einsatz kommen. Konkret ist es bei der erfindungsgemäßen Trocknungsanlage vorgesehen, dass die Vortrocknungsvorrichtung so ausgelegt ist, dass
40°C < T" ≤ 60°C und 60°C ≤ T'' ≤ 90°C gilt.

Um ein besonders effizientes weiters Anwärmen auf die zweite erhöhte Temperatur T'' zu ermöglichen, ist es bei einer bevorzugten Ausführungsform der erfindungsgemäßen Trocknungsanlage vorgesehen, dass es sich bei dem Wärmetauscher um einen Trommelwärmetauscher handelt.

Bei einer besonders vorteilhaften Ausführungsform der erfindungsgemäßen Trocknungsanlage ist es vorgesehen, dass die anströmbare Fläche durch Ketten eines Kettenförderers gebildet wird. Auf diese Art und Weise kann das Trocknungsgut einfach bei einer Aufgabestelle auf den Kettenförderer aufgegeben werden, und das Trocknungsgut wird mittels des Kettenförderers in Richtung Konvektionstrockner bewegt, während es vorgetrocknet wird, insbesondere in die Vortrocknungsbox hinein und wieder heraus. Dies erleichtert die Integration der erfindungsgemäßen Vortrocknungsvorrichtung in die Trocknungsanlage mit dem Konvektionstrockner. Beispielsweise kann der Transport auf dem Kettenförderer von der Aufgabestelle zum Konvektionstrockner zwischen 1,5 h und 2 h dauern. Durch Lücken der Ketten kann die Luft in das Trocknungsgut strömen, wenn sich dieses in der Vortrocknungsbox befindet.

Die relative Luftfeuchtigkeit der Luft beträgt typischerweise zwischen 8% und 10%, bevor die Luft in die Vortrocknungsbox eingeblasen wird. In der Vortrocknungsbox nimmt die Luft Feuchtigkeit des Trocknungsguts und verlässt die Vortrocknungsbox mit typischerweise 90% bis 95%. Dabei kühlt die Luft auf eine Temperatur T₀ ab, die typischerweise 40°C beträgt.

Die abgekühlte, feuchte Luft wird nun in den Luftentfeuchter gesaugt. Der Luftentfeuchter weist einen Verdampfer auf, in welchem Kältemittel durch die Wärme der angesaugten Luft verdampft wird, wodurch die angesaugte Luft wiederum unter den Taupunkt abgekühlt wird. Entsprechend kondensiert Wasser auf der kalten Oberfläche des Verdampfers und rinnt bzw. tropft vom Verdampfer ab. Um für eine effiziente Trocknung die entfeuchtete Luft auf die erste erhöhte Temperatur T' anzuwärmen, wird die entfeuchtete Luft durch einen Kondensator des Luftentfeuchters geleitet, in welchem das Kältemittel kondensiert und dabei latente Wärme abgibt, wodurch der Kondensator als Wärmequelle genutzt werden kann.

Darüber hinaus umfasst der Luftentfeuchter auch einen Kompressor, um das im Verdampfer verdampfte Kältemittel zu komprimieren. Dieser Kompressor kann als zusätzliche Wärmequelle benutzt werden, um die entfeuchtete Luft auf die erste erhöhte Temperatur T' anzuwärmen, obgleich auch andere zusätzliche Wärmequellen, z.B. eine zusätzliche elektrische Heizung vorstellbar wären.

Der Kompressor eignet sich deshalb besonders gut als zusätzliche Wärmequelle, da der Kompressor Wärme abgibt und zudem bequem zwischen Verdampfer und Kondensator untergebracht werden kann, ohne die Strömung der Luft vom Verdampfer zum Kondensator wesentlich zu beeinträchtigen. Dies trägt erheblich zur Ausnutzung möglichst aller ohnehin vorhandenen Wärmequellen für das Anwärmen der Luft bei - und damit zur Optimierung der Energieeffizienz der erfindungsgemäßen Vortrocknungsvorrichtung. Daher ist es bei der erfindungsgemäßen Trocknungsanlage vorgesehen, dass der Luftentfeuchter einen Verdampfer und
einen Kondensator aufweist, wobei der Verdampfer und der Kondensator derart angeordnet sind, dass die dem Luftentfeuchter zugeführte Luft sowohl durch den Verdampfer als auch durch den Kondensator führbar ist, wobei weiters zwischen Verdampfer und Kondensator eine Wärmequelle angeordnet ist, um die durch den Verdampfer durchgetretene Luft zusätzlich anzuwärmen, und wobei der Luftentfeuchter einen Kompressor umfasst, der zumindest teilweise, vorzugsweise vollständig die Wärmequelle ausbildet.

Um den Vortrocknungsvorgang steuern zu können, ist es wünschenswert, den Luftdurchsatz durch die Vortrocknungsbox einstellen zu können. Dies kann grundsätzlich durch eine Steuerung des Ventilators erfolgen. Hierbei ist zu berücksichtigen, dass die Dichte an aufgebebenem Trocknungsgut variieren kann, womit ein unterschiedlicher Widerstand für die in die Vortrocknungsbox eingeblasene Luft einhergeht. Daher ist es bei einer bevorzugten Ausführungsform der erfindungsgemäßen Trocknungsanlage vorgesehen, dass der Ventilator eine Drehzahlsteuerung aufweist, um die angesaugte Luftmenge auf einen vorgegebenen Wert einzustellen.

Eine einfach zu realisierende Möglichkeit zur Steuerung der Drehzahl des Ventilators aber auch zur Leistung des Luftentfeuchters, wobei diese im Wesentlichen durch die Leistung des Kompressors bestimmt wird, bieten Frequenzumrichter. Daher ist es bei einer bevorzugten Ausführungsform der erfindungsgemäßen Trocknungsanlage vorgesehen, dass zur Steuerung des Ventilators und/oder des Luftentfeuchters Frequenzumrichter vorgesehen sind.

Um die Menge an angesaugter Luft messen zu können, ist es bei einer bevorzugten Ausführungsform der erfindungsgemäßen Trocknungsanlage vorgesehen, dass ein Sensor zur Messung der Geschwindigkeit der angesaugten Luft vorgesehen ist, der vorzugsweise im Luftentfeuchter hinter dem Verdampfer angeordnet ist. Das Messergebnis kann in der Folge als Regelgröße zur Steuerung des mindestens einen Ventilators verwendet werden. Die Anordnung des Sensors hinter dem Verdampfer hat den Vorteil, dass der Verdampfer einen gewissen Schutz für den Sensor vor Staub bietet. Zudem erweist sich diese Sensoranordnung als besonders günstig, da der Luftentfeuchter eine definierte Querschnittsfläche darstellt, durch die die angesaugte Luftmenge durchtreten muss. Da diese Querschnittsfläche bekannt ist, kann durch Messung der Luftgeschwindigkeit im Luftentfeuchter unmittelbar auf die Menge der angesaugten Luft pro Zeit geschlossen werden.

Weiters ist es bei einer besonders bevorzugten Ausführungsform der erfindungsgemäßen Trocknungsanlage vorgesehen, dass im Anfangsbereich ein Sensor zur Messung des Drucks der eingeblasenen Luft angeordnet ist. Die damit mögliche Überwachung des Drucks im Anfangsbereich bzw. des sich ergebenden Differenzdrucks zwischen Anfangsbereich und Endbereich kann beispielsweise dazu verwendet werden sicherzustellen, dass ein gewisser zulässiger Höchstdruck im Anfangsbereich bzw. eine gewisse höchstzulässige Druckdifferenz nicht überschritten wird. Dies kann dann auftreten, wenn die Dichte des Trocknungsguts zu hoch ist und den Luftdurchsatz zu stark beeinträchtigt. Gegebenenfalls kann somit der mindestens eine Ventilator entsprechend zurückgeregelt werden.

Um den Trocknungsvorgang zu überwachen und automatisieren zu können, ist es bei einer bevorzugten Ausführungsform der erfindungsgemäßen Trocknungsanlage vorgesehen, dass sowohl im Anfangsbereich als auch im Endbereich Sensoren zur Messung der Temperatur und der Luftfeuchtigkeit vorgesehen sind.

Um für eine Automatisierung des Trocknungsvorgangs die Signale sämtlicher Sensoren verarbeiten zu können, ist es bei einer bevorzugten Ausführungsform der erfindungsgemäßen Trocknungsanlage vorgesehen, dass eine Regel-Steuereinheit, die vorzugsweise als speicherprogrammierbare Steuerung ausgeführt ist, vorgesehen ist, mittels welcher der Ventilator, der Luftentfeuchter sowie der Wärmetauscher ansteuerbar und/oder regelbar sind. Die Ausführung als speicherprogrammierbare Steuerung ermöglicht es beispielsweise, die Menge an aktuell zu trocknenden Trocknungsgut zu berücksichtigen und Schwellwerte für Luftfeuchtigkeit und Luftdurchsatz vorzugeben bzw. anzupassen.

Wie bereits festgehalten, lässt sich die Vortrocknungsvorrichtung problemlos in die erfindungsgemäße Trocknungsanlage integrieren.

Schließlich können insbesondere zur Bewältigung großer Mengen an Trocknungsgut bzw. zur Durchsatzsteigerung auch mehrere Vortrocknungsvorrichtungen hintereinander geschaltet sein. Entsprechend ist es bei einer bevorzugten Ausführungsform der erfindungsgemäßen Trocknungsanlage vorgesehen, dass mehrere Vortrocknungsvorrichtungen vorgesehen sind, die nacheinander angeordnet sind.

### KURZE BESCHREIBUNG DER FIGUREN

Die Erfindung wird nun anhand eines(von) Ausführungsbeispiels(en) näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Ansicht einer erfindungsgemäßen Trocknungsanlage mit Vortrocknungsvorrichtungen
- Fig. 2: eine schematische Schnittansicht einer Vortrocknungsvorrichtung
- Fig. 3: eine schematische Darstellung eines Luftentfeuchters einer Vortrocknungsvorrichtung

### WEGE ZUR AUSFÜHRUNG DER ERFINDUNG

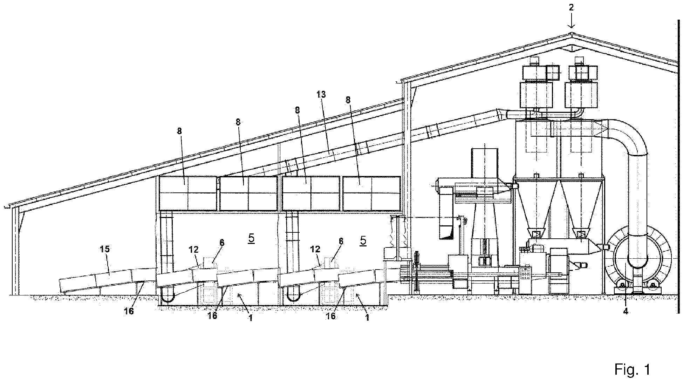

Fig. 1 zeigt eine schematische Ansicht einer Trocknungsanlage 2 mit einem Trommeltrockner 4 zur Trocknung von Trocknungsgut 3, insbesondere von Pflanzen, die zu Pellets oder Ballen weiterverarbeitet werden sollen. Der Trommeltrockner 4 arbeitet mit auf bis zu 1000°C erhitzter Luft, wobei zum Aufheizen der Luft ein, vorzugsweise mit Gas befeuerter Ofen verwendet wird. Das Trocknungsgut 3 wird bei einer Aufgabestelle 15 auf einen Kettenförderer 16, der das Trocknungsgut 3 mittels Ketten 10 in Richtung Trommeltrockner 4 transportiert.

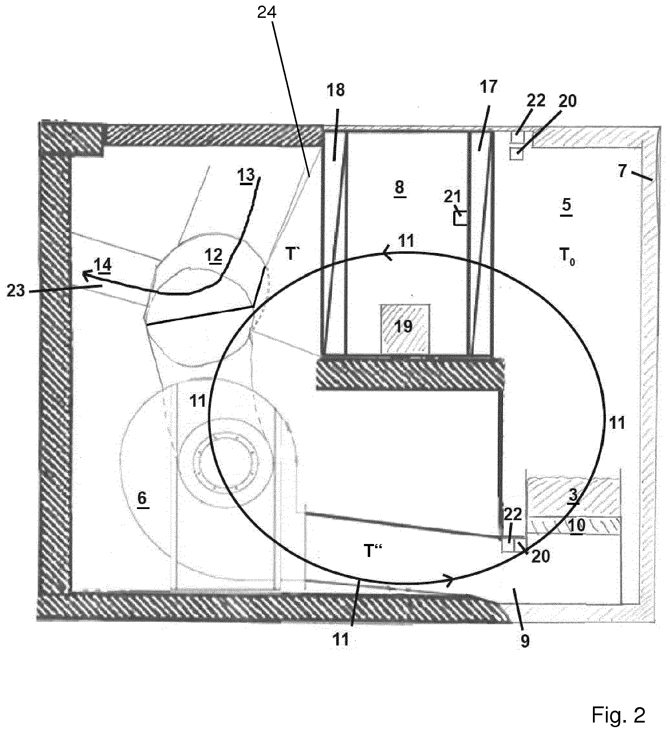

Um das Trocknungsgut 3 vorzutrocknen, wird das Trocknungsgut 3 durch den Kettenförderer 16 in eine Vortrocknungsbox 5 einer Vortrocknungsvorrichtung 1 transportiert, welche in Fig. 2 in einer schematischen Schnittansicht dargestellt ist. Die Ketten 10 des Kettenförderers 16 sind in einem Anfangsbereich 9 der Vortrocknungsbox 5 angeordnet und bilden eine anströmbare Fläche, auf der das Trocknungsgut 3 angeordnet ist. Mittels eines Ventilators 6 wird Luft durch Lücken zwischen Kettengliedern der Ketten 10 von unten in das Trocknungsgut 3 eingeblasen, um das Trocknungsgut 3 vorzutrocknen. Die geschlossenen Pfeile in Fig. 2 symbolisieren die jeweiligen Luftströmungsrichtungen 11, wobei die Luftströmungsrichtung 11 in der Vortrocknungsbox 5 vom Anfangsbereich 9 zu einem Endbereich 7 der Vortrocknungsbox 5 verläuft.

Die in die Vortrocknungsbox 5 eingeblasene Luft weist eine zweite erhöhte Temperatur T'' auf, die üblicherweise zwischen 60°C und 90°C liegt. Die relative Luftfeuchtigkeit, dieser in die Vortrocknungsbox 5 eingeblasenen Luft beträgt dabei typischerweise zwischen 8% und 10%. Mindestens ein Temperatur- und Feuchtigkeitssensor 20 im Anfangsbereich 9 gestattet die Messung von Temperatur und Luftfeuchtigkeit der Luft im Anfangsbereich 9.

Beim Durchtritt der Luft durch das Trocknungsgut 3 kühlt die Luft ab und nimmt Feuchtigkeit des Trocknungsguts 3 auf. Typischerweise weist die Luft im Endbereich 7 eine Temperatur T₀ von ca. 40°C und eine relative Luftfeuchtigkeit von 90% bis 95% auf.

Mittels des Ventilators 6 wird diese Luft nun in einen Luftentfeuchter 8 gesaugt, wo sie entfeuchtet und auf eine erste erhöhte Temperatur T' zwischen ca. 40°C und ca. 60°C angewärmt wird.

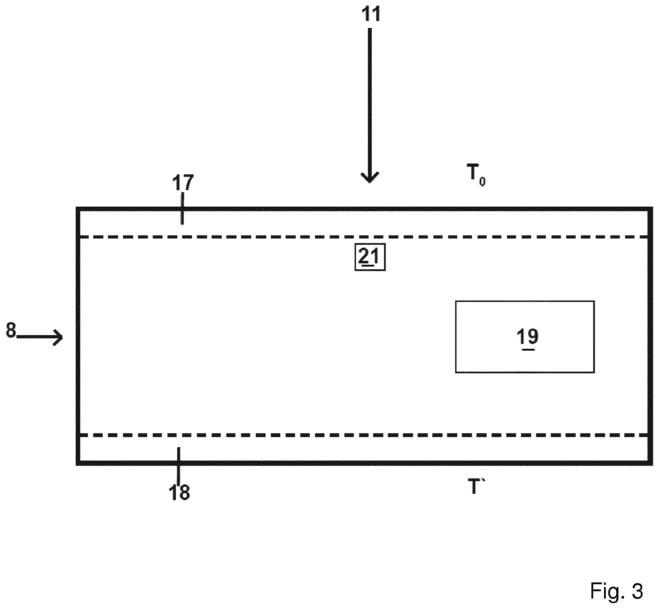

Der Aufbau des Luftentfeuchters 8 ist in Fig. 3 schematisch gezeigt, wobei der Pfeil die Luftströmungsrichtung 11 anzeigt und die Temperatur T₀ der Luft vor dem Luftentfeuchter sowie die Temperatur T' der Luft nach dem Luftentfeuchter vermerkt sind. Der Luftentfeuchter 8 weist einen Verdampfer 17 auf, in welchem Kältemittel (nicht dargestellt) durch die Wärme der angesaugten Luft verdampft wird. Hierdurch wird die angesaugte Luft unter den Taupunkt abgekühlt, und Wasser kondensiert auf der kalten Oberfläche des Verdampfers 17, von wo es abrinnt bzw. abtropft. Weiters weist der Luftentfeuchter 8 einen Kondensator 18 auf, in welchem das Kältemittel kondensiert und dabei latente Wärme abgibt. Hierdurch kann der Kondensator 18 als Wärmequelle zum Anwärmen der entfeuchteten Luft genutzt werden, in dem die Luft, nachdem sie den Verdampfer 17 passiert hat und entfeuchtet worden ist, auch durch den Kondensator 18 gesaugt wird.

Darüberhinaus umfasst der Luftentfeuchter 8 einen Kompressor 19, um das im Verdampfer 17 verdampfte Kältemittel zu komprimieren. Da der Kompressor 19 hierbei Wärme abgibt, eignet sich auch der Kompressor 19 als zusätzliche Wärmequelle, die zudem bequem zwischen Verdampfer 17 und Kondensator 18 angeordnet werden kann, ohne die Strömung der Luft vom Verdampfer 17 zum Kondensator 18 wesentlich zu beeinträchtigen, siehe Fig. 3.

Durch Nutzung des Kondensators 18 sowie des Kompressors 19 als - ohnehin vorhandene - Wärmequellen erfolgt die Anhebung der Temperatur der Luft von T₀ auf die erste erhöhte Temperatur T' gänzlich ohne weitere Wärmequellen. Im Prinzip wäre es möglich, bereits mit Luft, die lediglich auf T' - und nicht auf T'' - erwärmt ist, brauchbare Vortrocknungsergebnisse zu erzielen.

Allerdings kann im vorliegenden Fall zur Steigerung der Vortrocknungsleistung die Temperatur der Luft weiter, auf eine zweite erhöhte Temperatur T'' erwärmt werden, indem in Luftströmungsrichtung 11 gesehen nach dem Luftentfeuchter 8 und vor dem Ventilator 6 ein Trommelwärmetauscher 12 vorgesehen ist. Die durch den Luftentfeuchter 8 auf die Temperatur T' angewärmte Luft wird dem Trommelwärmetauscher über einen Trichter 24 zugeführt. Dem Trommelwärmetauscher 12 werden außerdem die Abgase des Trommeltrockners 4 über eine Abgaszuleitung 13 zugeführt, um die Luft von T' auf T'' anzuwärmen, bevor die Abgase schließlich über einen Kamin 14 abgeführt werden. Zur Verdeutlichung ist in Fig. 2 der Wärmeabgasstrom 23 mit einem gekrümmten Pfeil angedeutet.

Ein weiterer zu beachtender Punkt bei der Steuerung des Trocknungsvorgangs ist der Luftdurchsatz. Der Luftdurchsatz kann durch eine Steuerung des Ventilators 6 beeinflusst werden. Hierbei ist zu berücksichtigen, dass die Dichte des Trocknungsguts 3 variieren kann, womit ein unterschiedlicher Widerstand für die in die Vortrocknungsbox 5 eingeblasene Luft einhergeht. Entsprechend muss die Leistung bzw. die Drehzahl des Ventilators 6 steuerbar sein, wobei hierfür erfindungsgemäß Frequenzumrichter vorgesehen sind (nicht dargestellt). Vorzugsweise werden Frequenzumrichter außerdem auch zur Steuerung der Leistung Luftentfeuchters 8 bzw. des Kompressors 19 des Luftentfeuchters 8 eingesetzt.

Zur Bestimmung des Luftdurchsatzes bzw. der angesaugten Luftmenge ist ein Sensor bzw. Windgeschwindigkeitsmessumformer 21 zur Messung der Geschwindigkeit der angesaugten Luft vorgesehen, der vorzugsweise im Luftentfeuchter 8, hinter dem Verdampfer 17 angeordnet ist. Da der von der Luft durchströmbare Querschnitt des Luftentfeuchters 8 bekannt ist, ergibt sich daraus unmittelbar der Luftdurchsatz.

Weiters ist zur Überwachung des Drucks der Luft, die in die Vortrocknungsbox 5 eingeblasen wird, im Anfangsbereich 9 ein Drucksensor 22 angeordnet, vorzugsweise ebenso im Endbereich 7. Die damit mögliche Überwachung des Drucks im Anfangsbereich 9 bzw. des sich ergebenden Differenzdrucks zwischen Anfangsbereich 9 und Endbereich 7 kann beispielsweise dazu verwendet werden sicherzustellen, dass ein gewisser zulässiger Höchstdruck im Anfangsbereich 9 bzw. eine gewisse höchstzulässige Druckdifferenz nicht überschritten wird. Dies kann dann auftreten, wenn die Dichte des Trocknungsguts 3 zu hoch ist und den Luftdurchsatz zu stark beeinträchtigt. Gegebenenfalls kann somit der Ventilator 6 entsprechend zurückgeregelt werden.

Sämtliche Regel- und Steuervorgänge werden im gezeigten Ausführungsbeispiel durch eine Regel-Steuereinheit (nicht dargestellt) kontrolliert, die als speicherprogrammierbare Steuerung ausgeführt ist. Die Regel-Steuereinheit verarbeitet die Signale sämtlicher Sensoren 20, 21, 22. Die Ausführung der Regel-Steuereinheit als speicherprogrammierbare Steuerung ermöglicht es zudem, die aktuelle Menge des zu trocknenden Trocknungsguts 3 zu berücksichtigen und Schwellwerte für Luftfeuchtigkeit und Luftdurchsatz vorzugeben bzw. anzupassen. Basierend auf diesen Daten bzw. Angaben steuert und regelt die Regel-Steuereinheit die Leistung des Ventilators 6 sowie des Luftentfeuchters 8. Zudem kann die Regel-Steuereinheit den Trommeltrockner 12 ansteuern, um einen gewünschten Wert für die zweite erhöhte Temperatur T'' einzustellen. Auf diese Weise wird die Vortrocknung hochgradig automatisiert und optimiert durchgeführt.

### BEZUGSZEICHENLISTE

- 1: Vortrocknungsvorrichtung
- 2: Trocknungsanlage
- 3: Trocknungsgut
- 4: Trommeltrockner
- 5: Vortrocknungsbox
- 6: Ventilator
- 7: Endbereich der Vortrocknungsbox
- 8: Luftentfeuchter
- 9: Anfangsbereich der Vortrocknungsbox
- 10: Kette eines Kettenförderers
- 11: Luftströmungsrichtung
- 12: Trommelwärmetauscher
- 13: Abgaszuleitung
- 14: Kamin
- 15: Aufgabestelle
- 16: Kettenförderer
- 17: Verdampfer
- 18: Kondensator
- 19: Kompressor
- 20: Temperatur- und Feuchtigkeitssensor
- 21: Windgeschwindigkeitsmessumformer
- 22: Drucksensor
- 23: Wärmeabgasstrom
- 24: Trichter

## Patentansprüche

1. Trocknungsanlage (2) zur Trocknung von Trocknungsgut (3), vorzugsweise von Pflanzen, wobei die Trocknungsanlage (2) eine Vortrocknungsvorrichtung (1) umfasst, die Vortrocknungsvorrichtung (1) umfassend eine Vortrocknungsbox (5), in welcher das Trocknungsgut (3) anordenbar ist, einen Ventilator (6), durch den Luft aus einem Endbereich (7) der Vortrocknungsbox (5) ansaugbar und einem Luftentfeuchter (8) zuführbar ist, um mittels des Luftentfeuchters (8) die Luft zu entfeuchten und von einer Temperatur T₀ auf eine erste erhöhte Temperatur T' anzuwärmen,
wobei mittels des Ventilators (6) die Luft schließlich durch die Vortrocknungsbox (5) von einem Anfangsbereich (9) zum Endbereich (7) blasbar ist, wobei das Trocknungsgut (3) zwischen Anfangsbereich (9) und Endbereich (7) auf einer anströmbare Fläche (10) anordenbar ist, **dadurch gekennzeichnet, dass** die Trocknungsanlage (2) einen Konvektionstrockner (4) umfasst, dem die Vortrocknungsvorrichtung (1) vorgeschaltet ist, dass in einer Luftströmungsrichtung (11) gesehen nach dem Luftentfeuchter (8) und vor der Vortrocknungsbox (5) ein Wärmetauscher (12) vorgesehen ist, um Luft durch Abgase des Konvektionstrockners (4) auf eine zweite erhöhte Temperatur T'' anzuwärmen, wobei T'' ≥ T' gilt, dass der Luftentfeuchter (8) einen Verdampfer (17) und einen Kondensator (18) aufweist, wobei der Verdampfer (17) und der Kondensator (18) derart angeordnet sind, dass die dem Luftentfeuchter (8) zugeführte Luft sowohl durch den Verdampfer (17) als auch durch den Kondensator (18) führbar ist, wobei weiters zwischen Verdampfer (17) und Kondensator (18) eine Wärmequelle angeordnet ist, um die durch den Verdampfer (17) durchgetretene Luft zusätzlich anzuwärmen, und wobei der Luftentfeuchter (8) einen Kompressor (19) umfasst, der zumindest teilweise, vorzugsweise vollständig die Wärmequelle ausbildet, und dass die Vortrocknungsvorrichtung (1) so ausgelegt ist, dass 40°C < T'' ≤ 60°C und 60°C ≤ T'' ≤ 90°C gilt.

2. Trocknungsanlage (2) nach Anspruch 1, **dadurch gekennzeichnet, dass** es sich bei dem Wärmetauscher um einen Trommelwärmetauscher (12) handelt.

3. Trocknungsanlage (2) nach einem der Ansprüche 1 bis 2, **dadurch gekennzeichnet, dass** die anströmbare Fläche durch Ketten (10) eines Kettenförderers (16) gebildet wird.

4. Trocknungsanlage (2) nach einem der Ansprüche 1 bis 3, **dadurch gekennzeichnet, dass** der Ventilator (6) eine Drehzahlsteuerung aufweist, um die angesaugte Luftmenge auf einen vorgegebenen Wert einzustellen.

5. Trocknungsanlage (2) nach einem der Ansprüche 1 bis 4, **dadurch gekennzeichnet, dass** zur Steuerung des Ventilators (6) und/oder des Luftentfeuchters (8) Frequenzumrichter vorgesehen sind.

6. Trocknungsanlage (2) nach einem der Ansprüche 1 bis 5, **dadurch gekennzeichnet, dass** sowohl im Anfangsbereich (9) als auch im Endbereich (7) Sensoren (20) zur Messung der Temperatur und der Feuchtigkeit der Luft vorgesehen sind.

7. Trocknungsanlage (2) nach einem der Ansprüche 1 bis 6, **dadurch gekennzeichnet, dass** ein Sensor (21) zur Messung der Geschwindigkeit der angesaugten Luft vorgesehen ist, der vorzugsweise im Luftentfeuchter (8) hinter dem Verdampfer (17) angeordnet ist.

8. Trocknungsanlage (2) nach einem der Ansprüche 1 bis 7, **dadurch gekennzeichnet, dass** im Anfangsbereich (9) ein Sensor (22) zur Messung des Drucks der eingeblasenen Luft angeordnet ist.

9. Trocknungsanlage (2) nach einem der Ansprüche 1 bis 8, **dadurch gekennzeichnet, dass** eine Regel-Steuereinheit, die vorzugsweise als speicherprogrammierbare Steuerung ausgeführt ist, vorgesehen ist, mittels welcher der Ventilator (6), der Luftentfeuchter (8) sowie der Wärmetauscher (12) ansteuerbar und/oder regelbar sind.

10. Trocknungsanlage (2) nach einem der Ansprüche 1 bis 9, **dadurch gekennzeichnet, dass** mehrere Vortrocknungsvorrichtungen (1) vorgesehen sind, die nacheinander angeordnet sind.

## Claims

1. Drying plant (2) for drying material (3) to be dried, preferably plants, wherein the drying plant (2) comprises a predrying device (1), the predrying device (1) comprising a predrying box (5) in which the material (3) to be dried can be arranged, a fan (6) through which air can be drawn in from an end region (7) of the predrying box (5) and supplied to an air dehumidifier (8) in order to dehumidify the air by means of the air dehumidifier (8) and to heat said air from a temperature T₀ to a first elevated temperature T', wherein the air can finally be blown through the predrying box (5) from an initial region (9) to the end region (7) by means of the fan (6), wherein the material (3) to be dried can be arranged between the initial region (9) and the end region (7) on a surface (10) which can be subjected to inflow, **characterized in that** the drying plant (2) comprises a convection dryer (4), which is preceded by the predrying device (1), **in that** a heat exchanger (12) is provided, as viewed in an air flow direction (11), downstream of the air dehumidifier (8) and upstream of the predrying box (5), in order to heat air to a second elevated temperature T" by exhaust gases from the convection dryer (4), wherein T">T' applies, **in that** the air dehumidifier (8) has an evaporator (17) and a condenser (18), wherein the evaporator (17) and the condenser (18) are arranged in such a way that the air supplied to the air dehumidifier (8) can be guided both through the evaporator (17) and through the condenser (18), wherein further a heat source is arranged between the evaporator (17) and the condenser (18), for additionally heating the air which has passed through the evaporator (17), and wherein the air dehumidifier (8) comprises a compressor (19) which at least partially, preferably completely, forms the heat source, and **in that** the predrying device (1) is designed such that 40°C<T'≤60°C and 60°C≤T"≤90°C applies.

2. Drying plant (2) according to claim 1, **characterized in that** the heat exchanger is a drum heat exchanger (12).

3. Drying plant (2) according to one of claims 1 to 2, **characterized in that** the surface which can be subjected to inflow is formed by chains (10) of a chain conveyor (16).

4. Drying plant (2) according to one of claims 1 to 3, **characterized in that** the fan (6) has a speed control in order to adjust the amount of air sucked in to a predetermined value.

5. Drying plant (2) according to one of claims 1 to 4, **characterized in that** frequency converters are provided for controlling the fan (6) and/or the air dehumidifier (8).

6. Drying plant (2) according to one of claims 1 to 5, **characterized in that** sensors (20) for measuring the temperature and humidity of the air are provided both in the initial region (9) and in the end region (7).

7. Drying plant (2) according to one of claims 1 to 6, **characterized in that** a sensor (21) is provided for measuring the speed of the aspirated air, which sensor is preferably arranged in the air dehumidifier (8) behind the evaporator (17).

8. Drying plant (2) according to one of claims 1 to 7, **characterized in that** a sensor (22) for measuring the pressure of the injected air is arranged in the initial region (9).

9. Drying plant (2) according to one of claims 1 to 8, **characterized in that** a regulating control unit is provided, which is preferably designed as a programmable logic controller, and by means of which the fan (6), the air dehumidifier (8) and the heat exchanger (12) can be controlled and/or regulated.

10. Drying plant (2) according to one of claims 1 to 9, **characterized in that** a plurality of predrying devices (1) are provided which are arranged in succession.

## Revendications

1. Installation de séchage (2) pour le séchage de matière à sécher (3), de préférence de végétaux, laquelle installation de séchage (2) comprend un dispositif de pré-séchage (1), le dispositif de pré-séchage (1) comprenant un caisson de pré-séchage (5) dans lequel la matière à sécher (3) peut être disposée, un ventilateur (6) qui peut aspirer de l'air dans une zone d'extrémité (7) du caisson de pré-séchage (5) et l'amener à un déshumidificateur d'air (8) pour déshumidifier l'air au moyen du déshumidificateur d'air (8) et le chauffer d'une température T₀ à une première température élevée T', dans laquelle le ventilateur (6) peut finalement souffler l'air à travers le caisson de pré-séchage (5) d'une zone de départ (9) à la zone d'extrémité (7), la matière à sécher (3) pouvant être disposée entre la zone de départ (9) et la zone d'extrémité (7) sur une surface exposée au passage de l'air (10), **caractérisée en ce que** l'installation de séchage (2) comprend un sécheur à convection (4) en amont duquel le dispositif de pré-séchage (1) est installé, **en ce qu'**un échangeur de chaleur (12) est prévu dans un sens de passage de l'air (11) après le déshumidificateur d'air (8) et avant le caisson de pré-séchage (5) pour chauffer l'air à une deuxième température élevée T", telle que T" ≥ T', à l'aide des gaz qui s'échappent du sécheur à convection (4), **en ce que** le déshumidificateur d'air (8) présente un évaporateur (17) et un condenseur (18), l'évaporateur (17) et le condenseur (18) étant disposés de telle manière que l'air amené au déshumidificateur d'air (8) puisse être passé aussi bien à travers l'évaporateur (17) qu'à travers le condenseur (18), et une source de chaleur étant disposée entre l'évaporateur (17) et le condenseur (18) afin de réchauffer encore l'air qui a traversé l'évaporateur (17), et le déshumidificateur d'air (8) comprenant un compresseur (19) qui forme au moins en partie, de préférence entièrement, la source de chaleur, et **en ce que** le dispositif de pré-séchage (1) est conçu de manière à obtenir 40 °C < T' ≤ 60 °C et 60 °C ≤ T" ≤ 90 °C.

2. Installation de séchage (2) selon la revendication 1, **caractérisée en ce que** l'échangeur de chaleur est un échangeur de chaleur à tambour (12).

3. Installation de séchage (2) selon l'une des revendications 1 à 2, **caractérisée en ce que** la surface exposée au passage de l'air est formée par des chaînes (10) d'un convoyeur à chaînes (16).

4. Installation de séchage (2) selon l'une des revendications 1 à 3, **caractérisée en ce que** le ventilateur (6) présente une commande de vitesse afin de régler le débit d'air aspiré à une valeur prédéterminée.

5. Installation de séchage (2) selon l'une des revendications 1 à 4, **caractérisée en ce qu'**un variateur de fréquence est prévu pour commander le ventilateur (6) et/ou le déshumidificateur d'air (8).

6. Installation de séchage (2) selon l'une des revendications 1 à 5, **caractérisée en ce que** des capteurs (20) sont prévus aussi bien dans la zone de départ (9) que dans la zone d'extrémité (7) pour mesurer la température et l'humidité de l'air.

7. Installation de séchage (2) selon l'une des revendications 1 à 6, **caractérisée en ce qu'**un capteur (21) est prévu, de préférence dans le déshumidificateur d'air (8) après l'évaporateur (17), pour mesurer la vitesse de l'air aspiré.

8. Installation de séchage (2) selon l'une des revendications 1 à 7, **caractérisée en ce qu'**un capteur (22) est disposé dans la zone de départ (9) pour mesurer la pression de l'air injecté.

9. Installation de séchage (2) selon l'une des revendications 1 à 8, **caractérisée en ce qu'**il est prévu une unité de régulation et de commande, réalisée de préférence comme un automate programmable, au moyen de laquelle le ventilateur (6), le déshumidificateur d'air (8) et l'échangeur de chaleur (12) peuvent être commandés et/ou régulés.

10. Installation de séchage (2) selon l'une des revendications 1 à 9, **caractérisée en ce que** sont prévus plusieurs dispositifs de pré-séchage (1) disposés à la suite les uns des autres.
